(19) **Europäisches Patentamt / European Patent Office / Office européen des brevets**

(11) **EP 4 693 515 A1**

(12) # EUROPEAN PATENT APPLICATION
published in accordance with Art. 153(4) EPC

(43) Date of publication:
**11.02.2026 Bulletin 2026/07**

(21) Application number: **24863209.3**

(22) Date of filing: **05.09.2024**

(51) International Patent Classification (IPC):
$H01M\ 4/62^{(2006.01)}$    $H01M\ 4/13^{(2010.01)}$
$H01M\ 10/052^{(2010.01)}$    $C01B\ 32/174^{(2017.01)}$
$H01M\ 4/02^{(2006.01)}$

(52) Cooperative Patent Classification (CPC):
**C01B 32/174; H01B 1/04; H01B 1/24; H01M 4/02;
H01M 4/13; H01M 4/62; H01M 10/052;** Y02E 60/10

(86) International application number:
**PCT/KR2024/013390**

(87) International publication number:
**WO 2025/053630 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.09.2023 KR 20230118664**

(71) Applicant: **LG Energy Solution, Ltd.**
**Seoul 07335 (KR)**

(72) Inventors:
• **PARK, Sang Hyun**
**Daejeon 34122 (KR)**

• **PARK, Joo Yong**
**Daejeon 34122 (KR)**
• **KIM, Young Jae**
**Daejeon 34122 (KR)**
• **KIM, Tae Gon**
**Daejeon 34122 (KR)**
• **LIM, Han Min**
**Daejeon 34122 (KR)**
• **KIM, Cho Won**
**Daejeon 34122 (KR)**

(74) Representative: **Hoffmann Eitle**
**Patent- und Rechtsanwälte PartmbB**
**Arabellastraße 30**
**81925 München (DE)**

(54) **CONDUCTIVE MATERIAL DISPERSION SOLUTION, ELECTRODE MANUFACTURED USING SAME, AND LITHIUM SECONDARY BATTERY**

(57) Disclosed in the present invention are a conductive material dispersion solution, an electrode manufactured using the conductive material dispersion solution, and a secondary battery. The conductive material dispersion solution comprises single-walled carbon nanotubes, a fluorine-based polymer and an organic solvent, wherein the dispersion index (D), which reflects the characteristics of unsaturated functional groups in a polymer and a comonomer or saturated functional groups, of the fluorine-based polymer is 0.10-0.90, and the conductive material dispersion solution containing the fluorine-based polymer has a low viscosity and has fewer agglomerated particles in a dispersed state, thereby having excellent dispersibility, and exhibits less change in viscosity over time, thereby having excellent storage stability.

EP 4 693 515 A1

**Description**

**TECHNICAL FIELD**

The present invention relates to a conductive agent dispersion including single-walled carbon nanotubes and a fluorine-based polymer in which a dispersion index defined by factors affecting dispersibility satisfies a specific value, and an electrode and a lithium secondary battery in which the dispersion is used.

**BACKGROUND ART**

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity, have been subjected to considerable research and have been commercialized and widely used.

An electrode of the secondary battery includes an electrode active material, a conductive agent, and a binder. Carbon nanotubes may be used as the conductive agent to improve conductivity of the electrode, and in a case in which carbon nanotubes with a large specific surface area are particularly used, an effect of improving the conductivity is excellent even if a small amount is used.

In a case in which single-walled carbon nanotubes are used instead of multi-walled carbon nanotubes, resistance of the electrode may be further reduced and, since their specific surface area is relatively large, the single-walled carbon nanotubes have an effect of easily securing the conductivity with only a small amount thereof. In order for the single-walled carbon nanotubes to be uniformly distributed in the electrode, after a conductive agent dispersion, in which the single-walled carbon nanotubes are dispersed, is first formed during preparation of the electrode, an electrode slurry is prepared by using the conductive agent dispersion.

A high-pressure homogenizer is used in the preparation of the conductive agent dispersion. Specifically, in the high-pressure homogenizer, a pre-mixed solution containing bundle-type single-walled carbon nanotubes, a dispersant, and a dispersion medium is passed through a nozzle having a diameter of 80 $\mu$m to 800 $\mu$m by a high pressure of 100 bar to 2,500 bar, and accordingly, a shear force is applied to the bundle-type single-walled carbon nanotubes to cause dispersion of the bundle-type single-walled carbon nanotubes.

In a state in which the solution containing the bundled single-walled carbon nanotubes, the dispersant, and the dispersion medium is pre-mixed, a dispersion process using the high-pressure homogenizer is possible only when the bundle-type carbon nanotubes in the solution are effectively de-bundled by the dispersant, and a conductive agent dispersion, in which the single-walled carbon nanotubes are uniformly dispersed, may be finally prepared. In contrast, if the debundling is not smooth during the pre-mixing, since phase separation occurs between the bundle-type carbon nanotubes and the dispersion medium in the solution, the nozzle of the high-pressure homogenizer is clogged by the bundle-type carbon nanotubes, and thus, the dispersion process through the high-pressure homogenizer is not possible.

To solve such a dispersibility problem, a method of including an auxiliary dispersant in the conductive agent dispersion together with a hydrogenated nitrile butadiene rubber, as a dispersant, has been conventionally used. However, this problem becomes more prominent when carbon nanotubes with a large specific surface area, such as the single-walled carbon nanotubes, are used, and various problems arise due to high viscosity. Thus, there is a need for research on a conductive agent dispersion which may improve the dispersibility of the single-walled carbon nanotubes.

**DISCLOSURE OF THE INVENTION**

**TECHNICAL PROBLEM**

An aspect of the present invention provides a conductive agent dispersion in which an amount of carbon nanotubes having a large particle size is small, and a dispersion index is adjusted by using a dispersant having a controlled weight-average molecular weight and a controlled amount of a functional group to achieve excellent dispersibility and storage stability.

Also, it is intended to provide a conductive agent dispersion containing a modified polysiloxane-based material capable of further maximizing the dispersibility in the dispersion having excellent dispersibility.

Another aspect of the present invention provides an electrode and a secondary battery which are prepared by using the above conductive agent dispersion.

**TECHNICAL SOLUTION**

[1] According to an embodiment of the present invention, provided is a conductive agent dispersion including single-walled carbon nanotubes and a fluorine-based polymer, wherein the fluorine-based polymer has a dispersion index (D) defined by Equation 1 of 0.10 to 0.90.

$$[\text{Equation 1}]$$

$$D = [10^6(1+W_u)] / [M_w(1+W_s)(1+M_H)]$$

In Equation 1, $M_w$ is a unitless number of a weight-average molecular weight (g/mol) of the fluorine-based polymer, $W_u$ is a weight fraction of an unsaturated functional group unit in the fluorine-based polymer, $W_s$ is a weight fraction of a saturable residual compound unit in the fluorine-based polymer, and $M_H$ is the number of moles of heteroatoms in the saturable residual compound unit, wherein the saturable residual compound unit is at least one selected from a saturated functional group unit and a comonomer unit.

[2] The conductive agent dispersion of [1] above, wherein the conductive agent dispersion may further include a modified polysiloxane-based material.

[3] The conductive agent dispersion of [2] above, wherein the modified polysiloxane-based material may have a molecular weight of 4,000 g/mol to 8,000 g/mol.

[4] The conductive agent dispersion of at least one of [2] and/or [3] above, wherein the modified polysiloxane-based material may include polydialkyl siloxane, and the alkyl may have 1 to 5 carbon atoms.

[5] The conductive agent dispersion of at least one of [1] to [4] above, wherein the fluorine-based polymer may be polyvinylidene fluoride.

[6] The conductive agent dispersion of at least one of [1] to [5] above, wherein an unsaturated functional group of the fluorine-based polymer may include a carboxyl group.

[7] The conductive agent dispersion of at least one of [1] to [6] above, wherein the saturated functional group may include an alkoxy group having 1 to 5 carbon atoms, and the comonomer unit may include a hexafluoropropylene unit.

[8] The conductive agent dispersion of at least one of [1] to [7] above, wherein the unsaturated functional group of the fluorine-based polymer may be included in an amount of 0.01 wt% to 1.0 wt% based on a total weight of the polymer.

[9] The conductive agent dispersion of at least one of [1] to [8] above, wherein the saturable residual compound unit of the fluorine-based polymer is included in an amount of 0.01 wt% to 5.0 wt% based on the total weight of the polymer.

[10] The conductive agent dispersion of at least one of [1] to [9] above, wherein the fluorine-based polymer may have a weight-average molecular weight of 1,000,000 g/mol to 2,000,000 g/mol.

[11] According to another embodiment of the present invention, provided is an electrode including an electrode active material, single-walled carbon nanotubes, and a fluorine-based polymer, wherein the fluorine-based polymer has a dispersion index (D) represented by Equation 1 of 0.10 to 0.90.

$$[\text{Equation 1}]$$

$$D = [10^6(1+W_u)] / [M_w(1+W_s)(1+M_H)]$$

In Equation 1, $M_w$ is a unitless number of a weight-average molecular weight (g/mol) of the fluorine-based polymer, $W_u$ is a weight fraction of an unsaturated functional group unit in the fluorine-based polymer, $W_s$ is a weight fraction of a saturable residual compound unit in the fluorine-based polymer, and $M_H$ is the number of moles of heteroatoms in the saturable residual compound unit, wherein the saturable residual compound unit is at least one selected from a saturated functional group unit and a comonomer unit.

[12] According to another embodiment of the present invention, provided is a lithium secondary battery having a structure in which an electrode and a separator are alternatingly stacked, wherein the electrode is the above-described electrode.

ADVANTAGEOUS EFFECTS

A conductive agent dispersion according to the present invention may have excellent dispersibility due to a small amount of carbon nanotubes having a large particle size and low viscosity by controlling a dispersion index, which is defined from establishment of a relationship between factors affecting dispersibility in a fluorine-based polymer that is included as a dispersant, and may have excellent storage stability due to a small change in viscosity over time.

Also, phase stability of an electrode slurry may be improved by including the conductive agent dispersion in the slurry, and, since conductivity may be sufficiently secured even with the small amount of the carbon nanotubes, an electrode with high energy density may be achieved.

Furthermore, a high-power battery may be achieved because resistance may be improved even though an amount of a conductive agent in the slurry is reduced due to excellent dispersibility.

## MODE FOR CARRYING OUT THE INVENTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, a "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mino II by Bell Japan Inc.

$D_{10}$, $D_{50}$, and $D_{90}$ in the present specification may be defined as particle diameters at cumulative volumes of 50% and 90% in a particle diameter distribution curve, respectively. The $D_{50}$ and $D_{90}$, for example, may be measured by using a laser diffraction method. The laser diffraction method may generally measure a particle diameter ranging from submicrons to a few mm and may obtain highly repeatable and high-resolution results.

A "weight-average molecular weight (Mw)" in the present specification denotes a standard polystyrene-equivalent value measured by gel permeation chromatography (GPC). Specifically, the weight average molecular weight is a value obtained by converting a value measured using GPC under the following conditions, and standard polystyrene of Agilent system was used to prepare a calibration curve.

<Measurement conditions>

Measuring instrument: Agilent GPC (Agulent 1200 series, USA)
Column: connect two PL mixed B
Column temperature: 40°C
Eluent: tetrahydrofuran
Flow rate: 1.0 mL/min
Concentration: ~ 1 mg/mL (100 μL injection)

Hereinafter, the present invention will be described in detail.

In this specification, each of the conductive agent dispersion, the electrode, and the lithium secondary battery includes at least one of technical features and/or technical configurations described below, and these technical features and/or technical configurations may be combined in various ways.

## Conductive Agent Dispersion

A conductive agent dispersion according to an embodiment of the present invention includes single-walled carbon nanotubes and a fluorine-based polymer, wherein the fluorine-based polymer has a dispersion index (D) defined by Equation 1 below of 0.10 to 0.90.

[Equation 1]

$$D = [10^6(1+W_u)]/[M_w(1+W_s)(1+M_H)]$$

In Equation 1, $M_w$ is a unitless number of a weight-average molecular weight (g/mol) of the fluorine-based polymer, $W_u$ is a weight fraction of an unsaturated functional group in the fluorine-based polymer, $W_s$ is a weight fraction of a saturable residual compound unit in the fluorine-based polymer, and $M_H$ is the number of moles of heteroatoms in the saturable residual compound unit, wherein the saturable residual compound unit is at least one selected from a saturated functional group unit and a comonomer unit.

**(1) Single-walled Carbon Nanotube**

A graphite sheet of carbon nanotube has a cylindrical shape with a nano-sized diameter and has an $sp^2$ bond structure, wherein the carbon nanotube exhibits characteristics of a conductor or semiconductor depending on a structure and an angle at which the graphite sheet is rolled. The carbon nanotube may be classified into a single-walled carbon nanotube (SWCNT), a double-walled carbon nanotube (DWCNT), and a multi-walled carbon nanotube (MWCNT) depending on the number of bonds forming the wall.

According to an embodiment of the present invention, the conductive agent dispersion includes single-walled carbon nanotubes. Since the single-walled carbon nanotubes have a larger specific surface area than the multi-walled carbon nanotubes, sufficient conductivity may be secured even if only a small amount is added, and thus, a reduction in electrode resistance may be significantly increased.

The single-walled carbon nanotubes may have a $D_{50}$ of 2 μm to 8 μm, may specifically have a $D_{50}$ of 3 μm or more or 4 μm or more, and also, may have a $D_{50}$ of 7 μm or less or 6 μm or less. The single-walled carbon nanotubes may have a $D_{90}$ of 10 μm to 30 μm, may specifically have a $D_{90}$ of 12 μm or more, 14 μm or more, 16 μm or more, or 18 μm or more, and also, may have a $D_{90}$ of 28 μm or less, 26 μm or less, 24 μm or less, or 22 μm or less. That the above ranges are satisfied means that bundle-type carbon nanotubes used as a raw material are effectively dispersed and present in the conductive agent dispersion, and thus, it is effective in improving electrode and battery resistance.

The carbon nanotubes may be included in an amount of 0.4 part by weight to 2.0 parts by weight based on 100 parts by weight of the conductive agent dispersion, may specifically be included in an amount of 0.5 part by weight or more, 0.6 part by weight or more, 0.7 part by weight or more, or 0.8 part by weight or more, and also, may be included in an amount of 1.7 parts by weight or less, 1.5 parts by weight or less, 1.3 parts by weight or less, or 1.2 parts by weight or less. When the above range is satisfied, addition and transfer of an electrode slurry are easy while high productivity is maintained. Also, since a solid content of the prepared electrode slurry is not excessively low, occurrence of binder migration during drying of the electrode may be suppressed. Accordingly, electrode adhesion may be improved, and since packing of an electrode active material layer may be effectively achieved, an electrode with a small thickness may be prepared.

**(2) Fluorine-based Polymer**

The conductive agent dispersion according to the embodiment of the present invention includes a fluorine-based polymer, wherein the fluorine-based polymer is characterized in that a dispersion index (D) defined by Equation 1 below satisfies a range of 0.10 to 0.90.

[Equation 1]

$$D = [10^6(1+W_u)]/[M_w(1+W_s)(1+M_H)]$$

In Equation 1, $M_w$ is a unitless number of a weight-average molecular weight (g/mol) of the fluorine-based polymer, $W_u$ is a weight fraction of an unsaturated functional group in the fluorine-based polymer, $W_s$ is a weight fraction of a saturable residual compound unit in the fluorine-based polymer, and $M_H$ is the number of moles of heteroatoms in the saturable residual compound unit, wherein the saturable residual compound unit is at least one selected from a saturated functional group unit and a comonomer unit.

With respect to the dispersion index, a relationship between factors capable of affecting dispersion of the single-walled carbon nanotubes by using the fluorine-based polymer, as a dispersant, is established, wherein the weight-average molecular weight of the fluorine-based polymer, the amount of the unsaturated functional group in the fluorine-based polymer, and the amount of the saturable residual compound unit are taken into consideration.

How well the polymer used as the dispersant may disperse the single-walled carbon nanotubes may depend on how a polar part and a nonpolar part, which are present in the polymer as the dispersant, interact with the nonpolar carbon nanotubes and a polar organic solvent.

The dispersion index reflects the weight fraction of the unsaturated functional group with a high degree of polarity in the fluorine-based polymer, while also reflecting the weight fraction of the saturable residual compound unit which is polar but a degree of polarity is relatively lower than that of the unsaturated functional group, but, with respect to the saturable residual compound unit, considering that the number of moles of heteroatoms (e.g., fluorine (F), nitrogen (N), phosphorus (P), or oxygen (O)) included in the unit also has an effect, it is balanced with an effect of the unsaturated functional group.

It is difficult to accurately identify a degree of dispersion of the single-walled carbon nanotubes only with these factors, it may also be necessary to reflect influence of the polymer itself rather than the unit in the polymer, and, for example, the weight-average molecular weight is reflected as a factor to reflect influence due to steric hindrance or an overall size of the molecule.

The dispersion index thus derived may be viewed as an index which may more accurately confirm how well the single-walled carbon nanotubes may be dispersed, and the dispersion index is characterized by 0.10 to 0.90. The dispersion index may preferably be 0.11 or more, 0.12 or more, or 0.13 or more, may also be 0.85 or less, 0.80 or less, 0.75 or less, 0.70 or less, or 0.68 or less, and may most preferably be in a range of 0.14 to 0.67.

Since the dispersion index reflects various factors, a conductive agent dispersion with better dispersibility may be provided as its value is smaller, but, in a case in which the value is less than 0.10, since the weight-average molecular weight is excessively larger than the amount of the unsaturated functional group, there is a concern that contribution to the dispersion of the carbon nanotubes is reduced due to an attractive force between the corresponding polymers and, since the influence of the saturable residual compound unit becomes greater than the influence of the unsaturated functional group, there is a concern that aggregates with a large particle size may be formed in the dispersion even if viscosity of the dispersion is decreased.

In a case in which the dispersion index is greater than 0.90, since it is difficult to consider that the carbon nanotubes are properly dispersed, there is a problem in that the viscosity is high and an amount of particles with a large particle size is also increased.

The fluorine-based polymer may be at least one polymer selected from the group consisting of polyvinylidene fluoride (PVDF), polyperfluoroalkoxy (PFA), polytetrafluoroethylene (PTFE), and copolymers thereof copolymerized with comonomers, and may preferably be polyvinylidene fluoride. In a case in which the polyvinylidene fluoride is used in the dispersion of the single-walled carbon nanotubes, since it has excellent affinity with the organic solvent used, a polymer solution may be formed, and, as a result, there is an advantage of excellent processability.

The fluorine-based polymer may include a carboxyl group as the unsaturated functional group, and the unsaturated functional group may be included in an amount of 0.01 wt% to 1.00 wt% based on a total weight of the polymer, may preferably be included in an amount of 0.02 wt% or more, 0.03 wt% or more, or 0.05 wt% or more, and may be included in an amount of 0.90 wt% or less, 0.80 wt% or less, preferably, 0.75 wt% or less. The unsaturated functional group is a main factor providing polar properties, wherein it may be desirable to adjust the amount appropriately in order to contribute to the dispersion of the single-walled carbon nanotubes.

The fluorine-based polymer may include a saturable residual compound unit, and the saturable residual compound unit may mean a saturated functional group and/or a comonomer unit. In the present invention, the expression 'saturable residual compound unit' may mean a remaining compound unit excluding a main monomer unit and an unsaturated functional group. The saturated functional group in the saturable residual compound unit may include an alkoxy group having 1 to 5 carbon atoms, and the comonomer unit may include at least one selected from the group consisting of a hexafluoropropylene unit and chlorotrifluoroethylene.

The saturable residual compound unit may be included in an amount of 0.01 wt% to 5.0 wt% based on the total weight of the polymer, may preferably be included in an amount of 0.02 wt% or more, or 0.03 wt% or more, and also, may be included in an amount of 4.0 wt% or less, 3.0 wt% or less, or 2.5 wt% or less. Furthermore, the number of moles of heteroatoms included in the saturable residual compound unit may be in a range of 1 to 6, and this is considered together with the amount of the saturable residual compound unit so that the influence of the saturable residual compound unit on the dispersibility is proportionally reflected according to an amount of the heteroatoms with high electronegativity included.

The fluorine-based polymer may have a weight-average molecular weight of 1,000,000 g/mol to 2,000,000 g/mol. It may be desirable that the dispersion index is controlled to satisfy the above-described range by controlling the weight-average molecular weight such that it is not excessively small or excessively large.

The fluorine-based polymer in the conductive agent dispersion may be included in an amount of 0.5 part by weight to 6.0 parts by weight based on 100 parts by weight of the conductive agent dispersion, may specifically be included in an amount of 0.8 part by weight or more, 1.0 part by weight or more, 1.5 parts by weight or more, 2.0 parts by weight or more, or 2.4 parts by weight or more, and also, may be included in an amount of 5.0 parts by weight or less, 4.0 parts by weight or less, 3.0 parts by weight or less, or 2.6 parts by weight or less. When the above range is satisfied, a carbon-based conductive agent may be smoothly dispersed in the conductive agent dispersion, and energy density of the prepared electrode may be improved and the resistance may be reduced.

The conductive agent dispersion may further additionally include a dispersant in addition to the fluorine-based polymer, and, for example, may include a hydrogenated nitrile-based copolymer. The hydrogenated nitrile-based copolymer may be a copolymer including an $\alpha,\beta$-unsaturated nitrile-derived structural unit and a hydrogenated conjugated diene-derived structural unit, or may be a copolymer including an $\alpha,\beta$-unsaturated nitrile-derived structural unit, a conjugated diene-derived structural unit, and a hydrogenated conjugated diene-derived structural unit. The hydrogenated nitrile-based copolymer may be a hydrogenated nitrile butadiene rubber, and may specifically be a hydrogenated acrylonitrile-butadiene rubber, more specifically, a partially hydrogenated acrylonitrile-butadiene rubber.

### (3) Modified Polysiloxane-based Material

The conductive agent dispersion according to the embodiment of the present invention may further include a modified polysiloxane-based material. The modified polysiloxane-based material may have a molecular weight of 4,000 g/mol to 8,000 g/mol, preferably, 4,500 g/mol to 7,500 g/mol.

The modified polysiloxane-based material may be affected by the dispersion index of the above-described fluorine-based polymer. In a case in which the modified polysiloxane-based material is added together with a fluorine-based polymer with the dispersion index outside the range of 0.10 to 0.90, an effect of reducing the viscosity may be expected, but the amount of the particles with a large particle size may be increased to cause a problem of degrading the dispersibility. However, in a case in which the modified polysiloxane-based material is added together with the fluorine-based polymer satisfying the dispersion index, since the effect of reducing the viscosity may be expected without the degradation of the dispersibility, an effect of adding the modified polysiloxane-based material may be maximized, and thus, it is desirable that the modified polysiloxane-based material is additionally added to reduce the viscosity in consideration of the dispersion index.

A polysiloxane-based portion in the modified polysiloxane-based material may include dialkyl siloxane as a monomer unit, and with respect to the dialkyl siloxane, the alkyl may have 1 to 5 carbon atoms. For example, polydimethyl siloxane, polymethylethyl siloxane, or polymethylpropyl siloxane may be used as the polysiloxane-based portion.

Preferably, the modified polysiloxane-based material may be a polyether-based modified polysiloxane-based material that is modified by a polyether-based material, and, in this case, the material may be modified in a form in which the polyether-based material is bonded to the alkyl group. The polyether-based material may include a homopolymer such as polyethylene glycol, propoxylated polyethylene glycol, polypropylene glycol, and ethoxylated polypropylene glycol; a random copolymer thereof; or a block copolymer thereof.

The polyether-based modified polysiloxane-based material, for example, may be in a form of a block copolymer of the polyether-based material and a polysiloxane-based material. The modified polysiloxane-based material may be in a form in which the polyether-based material is distributed on one side and the polysiloxane-based material is distributed on the other side, and these two materials are connected by a covalent bond.

For example, a weight ratio of the polysiloxane-based material to the polyether-based material of the modified polysiloxane-based material may be in a range of about 95:5 to about 5:95, preferably 70:30 to 10:90, 60:40 to 10:90, 50:50 to 10:90, or 40:60 to 10:90, and more preferably 30:70 to 10:90.

Since the modified polysiloxane-based material has both a polar part and a nonpolar part in a molecule by being modified as described above, it may more actively interact with the fluorine-based polymer and the conductive agent, may further improve the dispersibility, and may particularly have a significant effect on the dispersion index through interaction with a functional group portion of the fluorine-based polymer, and thus, a significant synergistic effect may be expected.

### (4) Organic Solvent

The organic solvent may be an organic solvent containing one or more heteroatoms selected from the group consisting of a nitrogen atom (N) and an oxygen atom (O) having a lone pair of electrons.

Specifically, the organic solvent may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, $\gamma$-butyrolactone, and $\epsilon$-propiolactone, and any one thereof or a mixture of two or more thereof may be used. In consideration of compatibility with the electrode slurry, N-methyl pyrrolidone (NMP) is particularly preferred.

In the conductive agent dispersion, a solid content of the conductive agent dispersion may be in a range of 1 wt% to 10 wt%, particularly 2 wt% to 8 wt%, and more particularly 3.5 wt% to 5.5 wt%. When the above range is satisfied, the dispersion of the conductive agent dispersion may be effectively achieved while the viscosity of the conductive agent dispersion may be maintained at a low level. Herein, the solid content may denote the single-walled carbon nanotubes and the fluorine-based polymer which are included in the conductive agent dispersion.

The conductive agent dispersion may be prepared by mixing the single-walled carbon nanotubes, the fluorine-based polymer, and the organic solvent. In this case, the mixing may be performed using a conventional mixing method, specifically, a mixing device such as a homogenizer, a bead mill, a ball mill, a basket mill, an attrition mill, a universal stirrer, a clear mixer, a spike mill, or a TK mixer, and mixing order of each component is not particularly limited. That is, the conductive agent dispersion according to the present invention may be prepared by a method in which, after adding the single-walled carbon nanotubes to the organic solvent, the fluorine-based polymer is added and mixed, may be prepared by a method in which, after first adding the fluorine-based polymer to the organic solvent, the single-walled carbon nanotubes are mixed, and may be prepared by a method in which the single-walled carbon nanotubes and the fluorine-based polymer are added together to the organic solvent and then mixed.

A cavitation dispersion treatment may be performed in order to increase the dispersibility of the single-walled carbon nanotubes in the above mixing process. The cavitation dispersion treatment is a dispersion treatment method using a shock wave which is generated by rupture of vacuum bubbles formed in water when high energy is applied to the liquid, wherein the above method may disperse the single-walled carbon nanotubes without impairing properties of the single-walled carbon nanotubes. Specifically, the cavitation dispersion treatment may be performed by ultrasonic waves, a jet mill, or a shear dispersion treatment.

## Electrode

An electrode according to another embodiment of the present invention includes an electrode active material, single-walled carbon nanotubes, and a fluorine-based polymer, wherein a dispersion index of the fluorine-based polymer is the same as described above.

The electrode may include a current collector and an electrode active material layer disposed on the current collector, and the electrode active material layer may include the electrode active material, the single-walled carbon nanotubes, and the fluorine-based polymer.

The electrode active material layer may be formed by an electrode slurry composition including an electrode active material, a conductive agent dispersion, and a binder. Specifically, the electrode includes an electrode current collector and an electrode active material layer formed on the electrode current collector, and the electrode active material layer may be formed by an electrode slurry composition including an electrode active material, a conductive agent dispersion, and a binder.

In this case, the conductive agent dispersion is the above-described conductive agent dispersion according to the present invention. Since contents of the conductive agent dispersion are the same as those described above, a detailed description thereof will be omitted, and hereinafter, only the other components will be described.

The electrode current collector is not particularly limited as long as it has conductivity without causing chemical changes in a battery, and, for example, copper, stainless steel, aluminum, nickel, titanium, alloys thereof, these materials that are surface-treated with one of carbon, nickel, titanium, silver, or the like, or fired carbon may be used.

The electrode current collector may typically have a thickness of 3 $\mu$m to 500 $\mu$m, and microscopic irregularities may be formed on the surface of the collector to improve the adhesion of a negative electrode active material. Also, the electrode current collector, for example, may be used in various shapes such as that of a film, a sheet, a foil, a net, a porous body, a foam body, a non-woven fabric body, and the like.

The electrode active material (a) included in the electrode active material layer may be a positive electrode active material or negative electrode active material commonly used in the art, but types thereof are not particularly limited.

For example, as the positive electrode active material, a lithium oxide including lithium and at least one metal such as cobalt, manganese, nickel, or aluminum may be used. Specifically, the lithium oxide may include lithium-manganese-based oxide (e.g., $LiMnO_2$, $LiMn_2O$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y1}Mn_{Y1}O_2$ (where $0<Y1<1$), $LiMn_{2-Z1}Ni_{Z1}O_4$ (where $0<Z1<2$), etc.), lithium-nickel-cobalt-based oxide (e.g., $LiNi_{1-Y2}Co_{Y2}O_2$ (where $0<Y2<1$), lithium-manganese-cobalt-based oxide (e.g., $LiCo_{1-Y3}Mn_{Y3}O_2$ (where $0<Y3<1$), $LiMn_{2-z2}Co_{z2}O_4$ (where $0<Z2<2$), etc.), lithium-nickel-cobalt-manganese-based oxide (e.g., $Li(Ni_{P1}Co_{Q1}Mn_{R1})O_2$ (where $0<P1<1$, $0<Q1<1$, $0<R1<1$, and $P1+Q1+R1=1$) or $Li(Ni_{P2}Co_{Q2}Mn_{R2})O_4$ (where $0<P2<2$, $0<Q2<2$, $0<R2<2$, and $P2+Q2+R2=2$), etc.), or lithium-nickel-cobalt-manganese-transition metal (M) oxide (e.g., $Li(Ni_{P3}Co_{Q3}Mn_{R3}M^1_S)O_2$ (where $M^1$ is selected from the group consisting of Al, Cu, Fe, V, Cr, Ti, Zr, Zn, Ta, Nb, Mg, B, W, and Mo, and P3, Q3, R3, and S are atomic fractions of each independent elements, wherein $0<P3<1$, $0<Q3<1$, $0<R3<1$, $0<S<1$, and $P3+Q3+R3+S=1$), etc.), and any one thereof or a compound of two or more thereof may be included.

The negative electrode active material, for example, may include a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as $SiO_v(0<v<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material.

The electrode active material may be included in an amount of 90 wt% to 99 wt%, preferably, 95 wt% to 99 wt% based on a total solid content in the electrode slurry composition. When the amount of the electrode active material satisfies the above range, excellent energy density, electrode adhesion, and electrical conductivity may be achieved.

The binder is for securing adhesion between the electrode active materials and adhesion of the electrode active material to the current collector, wherein common binders used in the art may be used, and types thereof are not particularly limited. The binder, for example, may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated-EPDM, a styrenebutadiene rubber (SBR), a fluorine rubber, or various copolymers thereof, and any one thereof or a mixture of two or more thereof may be used.

The binder may be included in an amount of 5 wt% or less, preferably, 1 wt% to 3 wt% based on the total solid content in the electrode slurry composition. In a case in which the amount of the binder satisfies the above range, excellent electrode adhesion may be achieved while minimizing an increase in electrode resistance.

The electrode slurry composition may further include a solvent, if necessary, for viscosity control. In this case, the solvent may be water, an organic solvent, or a mixture thereof. The organic solvent, for example, may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, $\gamma$- butyrolactone, and $\varepsilon$-propiolactone, and any one thereof or a mixture of two or more thereof may be used, but the present invention is not limited thereto.

The solvent may be included in an amount such that the solid content in the electrode slurry is in a range of 60 wt% to 85 wt%, preferably, 65 wt% to 80 wt%. When the above range is satisfied, binder migration may be suppressed to improve the electrode adhesion, drying temperature may be decreased to improve coatability, and coating speed may be increased to improve productivity.

The electrode according to the present invention may be prepared by coating and drying the electrode slurry composition including the above-described components to form an electrode active material layer. Specifically, the electrode active material layer may be prepared by a method of coating the electrode slurry on an electrode current collector and drying the coated electrode current collector, or may be prepared by a method of casting the electrode slurry on a separate support and then laminating a film separated from the support on the electrode current collector. If necessary, the electrode active material layer is formed by the above-described method, and a rolling process may then be further performed. In this case, the drying and the rolling may be performed under appropriate conditions in consideration of physical properties of the electrode to be finally prepared, and are not particularly limited.

## Lithium Secondary Battery

A lithium secondary battery according to another embodiment of the present invention has a structure in which an electrode and a separator are alternatingly stacked, and the electrode includes the above-described electrode. Specifically, the secondary battery according to the present invention may include a positive electrode, a negative electrode, a separator disposed between the positive electrode and the negative electrode, and an electrolyte, and, in this case, the positive electrode may be the electrode of the above-described embodiment.

Since the electrode according to the present invention has been described above, a detailed description thereof will be omitted, and hereinafter, only the other components will be described.

The separator separates the negative electrode and the positive electrode and provides a movement path of lithium ions, wherein any separator may be used as the separator without particular limitation as long as it is typically used in a secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

As the non-aqueous organic solvent, for example, an aprotic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Particularly, among the carbonate-based organic solvents, since ethylene carbonate and propylene carbonate, as cyclic carbonate, well dissociate a lithium salt due to high permittivity as a highly viscous organic solvent, the cyclic carbonate may be preferably used, and, since an electrolyte having high electrical conductivity may be prepared when the above cyclic carbonate is mixed with low viscosity, low permittivity linear carbonate, such as dimethyl carbonate and diethyl carbonate, in an appropriate ratio and used, the cyclic carbonate may be more preferably used.

A lithium salt may be used as the metal salt, and the lithium salt is a material that is readily soluble in the non-aqueous organic solvent, wherein, for example, at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components.

## Examples

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples 1-1 to 1-3 and Comparative Examples 1-1 to 1-3

2.0 parts by weight of polyvinylidene fluoride (PVDF) as a fluorine-based polymer having characteristics listed in Table 1 below, 1.0 part by weight of single-walled carbon nanotubes (Tuball, OcSiAl), and 97 parts by weight of N-methyl pyrrolidone were mixed, and then mixed for 180 minutes using a mixer (BTM-50, disper 1000 rpm/anchor 100 rpm). The mixed mixture was stirred for 30 minutes using a high-pressure homogenizer (MICRONOX, Picomax MN230A, pressure: 1,500 bar) to obtain each conductive agent dispersion.

[Table 1]

| | Mw (g/mol x10⁶) | Main monomer unit (weight fraction) | Unsaturated functional group (weight fraction) | Saturable residual compound unit (weight fraction) | | | Dispersion index |
| --- | --- | --- | --- | --- | --- | --- | --- |
| | | | | Saturated functional group | Comonomer unit | The number of moles of hetero atoms | |
| Example 1-1 | 1.5 | 0.995 | 0.005 | 0 | 0 | 0 | 0. 67 |

(continued)

| | Mw (g/mol x10^6) | Main monomer unit (weight fraction) | Unsaturated functional group (weight fraction) | Saturable residual compound unit (weight fraction) | | | Dispersion index |
| | | | | Saturated functional group | Comonomer unit | The number of moles of hetero atoms | |
|---|---|---|---|---|---|---|---|
| Example 1-2 | 1.0 | 0.998 | 0.0015 | 0.0005 | 0 | 1 | 0.50 |
| Example 1-3 | 1.0 | 0.970 | 0.005 | 0 | 0.025 | 6 | 0.14 |
| Comparative Example 1-1 | 1.0 | 0.995 | 0.005 | 0 | 0 | 0 | 1.01 |
| Comparative Example 1-2 | 0.9 | 1.000 | 0 | 0 | 0 | 0 | 1.11 |
| Comparative Example 1-3 | 2.0 | 0.900 | 0.02 | 0 | 0.08 | 6 | 0.067 |

## Experimental Example 1: Particle Size Analysis

Particle sizes of each of the conductive agent dispersions of the examples and the comparative examples were analyzed through laser diffraction and are presented in Table 2. Specifically, after dispersing the conductive agent dispersion in a solvent, a particle size distribution was calculated by measuring a difference in diffraction patterns due to the particle size when the solution was introduced into a laser diffraction particle size measurement instrument (Malvern, Mastersizer 3000) and particles passed through a laser beam. $D_{10}$, $D_{50}$, and $D_{90}$ were measured by identifying particle diameters at points where 10%, 50%, and 90% were obtained in a cumulative volume distribution according to the particle diameter.

## Experimental Example 2: Viscosity Analysis (Immediately After Preparing the Conductive Agent Dispersion)

Viscosities of the conductive agent dispersions prepared in the examples and the comparative examples were measured at 25°C and 12 rpm using a viscometer (Brookfield, viscometer DV2T, LV), and are presented in Table 2.

## Experimental Example 3: Confirmation of Viscosity Increase During Long-term Storage

A viscosity increase rate (%) according to the following equation was confirmed for the conductive agent dispersions which were prepared by the examples and the comparative examples.

Viscosity increase rate (%) = {(viscosity of conductive agent dispersion measured after storage at 25°C for 4 weeks - viscosity of the conductive agent dispersion immediately after preparation) /viscosity of the conductive agent dispersion immediately after preparation}×100

[Table 2]

| | Particle size | | | Viscosity (cp) | Viscosity after 4 weeks of storage (cp) | Viscosity increase rate (%) |
| | $D_{10}(\mu m)$ | $D_{30}(\mu m)$ | $D_{90}(\mu m)$ | | | |
|---|---|---|---|---|---|---|
| Example 1-1 | 1.39 | 9.66 | 36.2 | 6,090 | 6,608 | 8.5 |
| Example 1-2 | 1. 48 | 11.10 | 37.4 | 7, 620 | 8,542 | 12.1 |
| Example 1-3 | 2.05 | 13.80 | 43.6 | 5, 940 | 6,605 | 11.2 |
| Comparative Example 1-1 | 2.70 | 15.00 | 48.5 | 9,600 | 11,060 | 15.2 |
| Comparative Example 1-2 | 1.99 | 13.30 | 45.9 | 9,120 | 10,960 | 20.2 |
| Comparative Example 1-3 | 3.00 | 17.10 | 51.2 | 12,050 | 14, 580 | 21.0 |

Referring to Table 1, with respect to Examples 1-1 to 1-3 in which the dispersion indices were in a range of 0.1 to 0.9, it may be confirmed that viscosities were low, changes in viscosity over time were small, and average particle diameters at a cumulative volume of 90% were relatively smaller than those of the comparative examples.

**Experimental Example 4: Evaluation of Addition of Modified Polysiloxane-based Material**

In the conductive agent dispersions of Examples 1-1 to 1-3 and Comparative Examples 1-1 to 1-3, instead of 2.0 parts by weight of the polyvinylidene fluoride as a dispersant, 0.5 part by weight of a modified polysiloxane-based material having a molecular weight of 6,000 g/mol (modified by bonding about 0.15 part by weight of polydimethylsiloxane (PDMS) with about 0.85 part by weight of polyethylene glycol) and 1.5 parts by weight of polyvinylidene fluoride were added to prepare conductive agent dispersions of Examples 2-1 to 2-3 and Comparative Examples 2-1 to 2-3, viscosity and particle size characteristics were evaluated in the same manner as in Experimental Examples 1 to 3, and the results thereof are presented in Table 3 below.

[Table 3]

| | Particle size | | | Viscosi ty (cp) | Viscosit y after 4 weeks of storage (cp) | Viscosi ty increas e rate (%) |
|---|---|---|---|---|---|---|
| | $D_{10}(\mu m)$ | $D_{30}(\mu m)$ | $D_{90}(\mu m)$ | | | |
| Example 2-1 | 1.51 | 12.4 | 39.6 | 5,910 | 6,560 | 11.2 |
| Example 2-2 | 1.60 | 11.7 | 42.0 | 4,800 | 5,424 | 13.1 |
| Example 2-3 | 1. 60 | 17.1 | 41.0 | 4,750 | 5,370 | 13.0 |
| Comparative Example 2-1 | 1.86 | 14.3 | 57.1 | 7,140 | 8,211 | 15.1 |
| Comparative Example 2-2 | 1.58 | 14.0 | 55.0 | 7,320 | 8,200 | 12.1 |
| Comparative Example 2-3 | 1.53 | 14.0 | 54.0 | 7,000 | 7,800 | 11.5 |

Referring to Table 3, that there was an effect of reducing the viscosity when the modified polysiloxane-based material was added to Examples 1-1 to 1-3 having a dispersion index of 0.10 to 0.90 may be confirmed through Examples 2-1 to 2-3, and it may be understood that this effect also appeared in Comparative Examples 2-1 to 2-3 which were cases where the modified polysiloxane-based material was added to Comparative Examples 1-1 to 1-3 that did not satisfy the dispersion index.

However, with respect to Comparative Examples 2-1 to 2-3, it may be confirmed that $D_{90}$s were significantly increased, and accordingly, it may be understood that, in case in which the dispersion index was not satisfied, the addition of the modified polysiloxane-based material may have a negative effect on the dispersibility.

**Claims**

1.    A conductive agent dispersion comprising single-walled carbon nanotubes and a fluorine-based polymer, wherein the fluorine-based polymer has a dispersion index (D) defined by Equation 1 of 0.10 to 0.90:

$$[\text{Equation 1}]$$

$$D = [10^6(1+W_u)]/[M_w(1+W_s)(1+M_H)]$$

wherein, in Equation 1,
$M_w$ is a unitless number of a weight-average molecular weight (g/mol) of the fluorine-based polymer, $W_u$ is a weight fraction of an unsaturated functional group unit in the fluorine-based polymer, $W_s$ is a weight fraction of a saturable residual compound unit in the fluorine-based polymer, and $M_H$ is the number of moles of heteroatoms in the saturable residual compound unit, wherein the saturable residual compound unit is at least one selected from a saturated functional group unit and a comonomer unit.

2.    The conductive agent dispersion of claim 1, further comprising a modified polysiloxane-based material.

3.    The conductive agent dispersion of claim 2, wherein the modified polysiloxane-based material has a molecular weight of 4,000 g/mol to 8,000 g/mol.

4.    The conductive agent dispersion of claim 2, wherein the modified polysiloxane-based material comprises polydialkyl siloxane, and

the alkyl has 1 to 5 carbon atoms.

5. The conductive agent dispersion of claim 1, wherein the fluorine-based polymer is polyvinylidene fluoride.

6. The conductive agent dispersion of claim 1, wherein an unsaturated functional group of the fluorine-based polymer comprises a carboxyl group.

7. The conductive agent dispersion of claim 1, wherein the saturated functional group comprises an alkoxy group having 1 to 5 carbon atoms, and
the comonomer unit comprises at least one selected from the group consisting of a hexafluoropropylene unit and chlorotrifluoroethylene.

8. The conductive agent dispersion of claim 1, wherein an unsaturated functional group of the fluorine-based polymer is included in an amount of 0.01 wt% to 1.0 wt% based on a total weight of the polymer.

9. The conductive agent dispersion of claim 1, wherein the saturable residual compound unit of the fluorine-based polymer is included in an amount of 0.01 wt% to 5.0 wt% based on a total weight of the polymer.

10. The conductive agent dispersion of claim 1, wherein the fluorine-based polymer has a weight-average molecular weight of 1,000,000 g/mol to 2,000,000 g/mol.

11. An electrode comprising an electrode active material, single-walled carbon nanotubes, and a fluorine-based polymer, wherein the fluorine-based polymer has a dispersion index (D) represented by Equation 1 of 0.05 to 0.95:

$$[\text{Equation 1}]$$

$$D = [10^6(1+W_u)]/[M_w(1+W_s)(1+M_H)]$$

wherein, in Equation 1,
$M_w$ is a unitless number of a weight-average molecular weight (g/mol) of the fluorine-based polymer, $W_u$ is a weight fraction of an unsaturated functional group unit in the fluorine-based polymer, $W_s$ is a weight fraction of a saturable residual compound unit in the fluorine-based polymer, and $M_H$ is the number of moles of heteroatoms in the saturable residual compound unit, wherein the saturable residual compound unit is at least one selected from a saturated functional group unit and a comonomer unit.

12. A lithium secondary battery having a structure in which an electrode and a separator are alternatingly stacked, wherein the electrode is the electrode of claim 11.

## INTERNATIONAL SEARCH REPORT

| International application No. |
|---|
| **PCT/KR2024/013390** |

| A. | CLASSIFICATION OF SUBJECT MATTER |
|---|---|

**H01M 4/62**(2006.01)i; **H01M 4/13**(2010.01)i; **H01M 10/052**(2010.01)i; **C01B 32/174**(2017.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/62(2006.01); H01M 10/052(2010.01); H01M 4/13(2010.01); H01M 4/139(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소나노튜브(carbon nanotube, CNT), 불소계 고분자(fluorine polymer), 분산액 (dispersion), 도전재(conductive additive), 실록산(siloxane)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0003984 A (DONGJIN SEMICHEM CO., LTD.) 11 January 2022 (2022-01-11)<br>See claims 1-3, 10 and 11. | 1-12 |
| A | KR 10-2019-0117387 A (LG CHEM, LTD.) 16 October 2019 (2019-10-16)<br>See claims 1, 8, 9, 10 and 18. | 1-12 |
| A | JP 2017-135062 A (TOYO INK SC HOLDINGS CO., LTD.) 03 August 2017 (2017-08-03)<br>See claims 1, 3 and 6. | 1-12 |
| A | CN 116387524 A (ZHUHAI TOYO COLOR CO., LTD.) 04 July 2023 (2023-07-04)<br>See claims 1 and 3. | 1-12 |
| A | KR 10-2022-0044731 A (TOYO INK SC HOLDINGS CO., LTD. et al.) 11 April 2022 (2022-04-11)<br>See claims 1 and 2. | 1-12 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 December 2024** | **17 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013390**

| Patent document cited in search report | | | Publication date (day/month/year) | Patent family member(s) | | | Publication date (day/month/year) |
|---|---|---|---|---|---|---|---|
| KR | 10-2022-0003984 | A | 11 January 2022 | CA | 3224415 | A1 | 06 January 2022 |
| | | | | CN | 115997307 | A | 21 April 2023 |
| | | | | EP | 4177989 | A1 | 10 May 2023 |
| | | | | US | 2023-0139306 | A1 | 04 May 2023 |
| | | | | WO | 2022-005241 | A1 | 06 January 2022 |
| KR | 10-2019-0117387 | A | 16 October 2019 | CN | 111954949 | A | 17 November 2020 |
| | | | | CN | 111954949 | B | 02 February 2024 |
| | | | | CN | 117913278 | A | 19 April 2024 |
| | | | | EP | 3761417 | A1 | 06 January 2021 |
| | | | | EP | 3761417 | B1 | 21 February 2024 |
| | | | | EP | 4329032 | A2 | 28 February 2024 |
| | | | | EP | 4329032 | A3 | 29 May 2024 |
| | | | | ES | 2973852 | T3 | 24 June 2024 |
| | | | | HU | E066214 | T2 | 28 July 2024 |
| | | | | JP | 2021-517352 | A | 15 July 2021 |
| | | | | JP | 7164244 | B2 | 01 November 2022 |
| | | | | KR | 10-2285981 | B1 | 05 August 2021 |
| | | | | PL | 3761417 | T3 | 13 May 2024 |
| | | | | US | 11831006 | B2 | 28 November 2023 |
| | | | | US | 2021-0020907 | A1 | 21 January 2021 |
| | | | | US | 2024-0079554 | A1 | 07 March 2024 |
| | | | | WO | 2019-194662 | A1 | 10 October 2019 |
| JP | 2017-135062 | A | 03 August 2017 | JP | 6569548 | B2 | 04 September 2019 |
| CN | 116387524 | A | 04 July 2023 | None | | | |
| KR | 10-2022-0044731 | A | 11 April 2022 | CN | 114342007 | A | 12 April 2022 |
| | | | | CN | 114342007 | B | 06 December 2022 |
| | | | | EP | 3988608 | A1 | 27 April 2022 |
| | | | | JP | 2022-042691 | A | 15 March 2022 |
| | | | | JP | 2022-043019 | A | 15 March 2022 |
| | | | | JP | 6962428 | B1 | 05 November 2021 |
| | | | | KR | 10-2464238 | B1 | 07 November 2022 |
| | | | | US | 11469421 | B2 | 11 October 2022 |
| | | | | US | 2022-0173401 | A1 | 02 June 2022 |
| | | | | WO | 2022-050329 | A1 | 10 March 2022 |

Form PCT/ISA/210 (patent family annex) (July 2022)